# EUROPEAN PATENT SPECIFICATION

(11) **EP 0 878 286 B1**
(45) Date of publication and mention of the grant of the patent: **19.12.2001**
(21) Application number: 98201456.5
(22) Date of filing: 07.05.1998
(51) Int. Cl.: B29C 47/14, B29C 55/00

(54) **Die for film extrusion**
Düse zum Extrudieren von Folien
Filière pour l'extrusion de film

(30) Priority: 16.05.1997 SE 9701831
(43) Date of publication of application: 18.11.1998
(73) Proprietor: Tetra Laval Holdings & Finance SA, 1009 Pully (CH)
(72) Inventor: Ryden, Asa, 224 56 Lund (SE); Postoaca, Ion, 237 35 Bjärred (SE)
(74) Representative: Petri, Stellan

(56) References cited:
- WO-A-92/06837
- GB-A- 918 910
- GB-A- 926 566
- US-A- 3 267 518
- US-A- 3 788 613

## Description

### Technical Field

The present invention relates to a die for extruding a melt of a polymer blend comprising droplets from a first polymer phase dispersed in a polymer matrix, which is incompatible with said first polymer phase, said die comprising a conical converging section prolonging the dispersed droplets in the flow direction and a diverging section broadening said dispersed droplets in a direction perpendicular to but within the same plane as the flow direction according to the precharacterising part of claim 1.

### Prior Art

The employment of polymers within the package industry has in recent years steadily increased depending on the many advantages of the polymer materials compared to other packaging materials such as paper, glass, metal, etc. The polymer materials, for example, exhibit low costs for raw materials and processing, fast and simple manufacturing process, low weight and favourable appearance. However, the employment of polymers as packaging materials has often a drawback, namely high permeability to various gases and solvents when only one polymer layer is present. Metal and glass packages have therefore been able to maintain a large market share for food packages which require good barrier properties to moist, solvents, oxygen and substances having a strong odour.

A method for solving the problem with insufficient barrier properties of polymers has been the application of coextrusion of different polymer materials, where the combination of the best properties of different polymers is employed to optimise a product. However, such coextrusion requires expensive and complicated equipment in the form of multi-layer dies, auxiliary extruders and proper adhesive tie layers between the polymer layers. The process optimisation is also very complicated when the polymer layers are laminated at large speeds and the high demands on homogeneity of the polymer layers are then difficult to fulfil.

A very important and widely used polymer, which is approved for food contact, is ethylene vinyl-alcohol copolymer (EVOH). EVOH can resist permeation of gases such as oxygen and carbon monoxide, vapour and organic liquids, including solvents. However, EVOH has certain shortcomings regarding for instance moisture sensitivity and decreasing oxygen resistance with high relative humidity. Therefore, during the manufacturing of coextruded products, a layer of EVOH is laminated between layers of one or several common polymers such as polyethylene (PE) or polypropylene (PP). PE and PP have namely excellent barrier properties to water but poorer resistance to oxygen. By combining EVOH with for instance PE or PP in a multi-layer structure with intermediate adhesive tie layers a material with high mechanical strength, low weight and excellent barrier properties is achieved.

As an alternative to the expensive multi-layer extrusion polymer blends may be used in order to obtain desirable product properties. Such polymer blends commonly comprise a blend of two or several polymers. Blends comprising "soluble" polymers, i.e. blendable or so called compatible polymers, result in polymer alloys while most polymer blends comprise "insoluble" or so called incompatible polymers which form a dispersion of one polymer in the other one. The properties of such a blend will then to a large extent depend on the morphology and/or microstructure of the blend. Increased degree of adhesion may with such incompatible blends be achieved at the interfaces between the phases by the adhesion of a compatibilizer.

The preamble of the enclosed claim 1 is based on WO 92/06837.

In WO 92/06837 it is previously disclosed a method for laminar extrusion, wherein overlapping layers of an EVOH phase are dispersed in a matrix phase of PP incompatible with the EVOH phase for the manufacture of a material having barrier properties to vapour, gas and/or organic liquids. The polymer blend is blended and melted in an ordinary extruder having a rotating screw and is injected into a die having a first conical section and a subsequent cylindrical section and finally a thin diverging section with substantially even thickness ending with a slot. In the first conical section of the die a converging flow is achieved in order to prolong the dispersed bodies in the EVOH phase in the flow direction. In the cylindrical section the dispersed EVOH bodies are further prolonged, a diverging flow then being achieved in the diverging section in order to prolong the bodies in the second direction transversally to the first direction but within the same plane as the flow direction. This prolongation and broadening of the bodies at the extrusion achieves the overlapping layers of EVOH phase. In order to achieve optimal barrier properties of the polymer material the flow rate should however be relatively low. When it is desirable that the coating rate is very high this is a great disadvantage at large scale coatings.

GB 926 566 shows a piston positioned in a cylindrical member into which a polymeric material is placed. Depression of the piston forces the material through a cylindrical section where the material is stretched longitudinally. After loading the cylindricalsection, the material is forced through a tapered die which is tapered laterally with respect to the incoming, stretched material. Transverse stretching occurs as the material passes through the tapered die.

US 3 267 518 relates to the production of a special type of carbonaceous electrode or core material for atomic reactors. The apparatus shown comprises a cylindrical extrusion chamber, a transition section, and a final forming section. The transition section has a circular inlet and a rectangular outlet. The final forming section has a rectangular inlet and a rectangular outlet, the breadth of which is equal to the breadth of the inlet, but the height is substantially less than the height of the inlet.

In US 3 788 613 an extrusion apparatus is shown having a chamber which diverges from the inlet to the outlet thereof. The outlet of the chamber is in continuous and open communication with the inlet of a fusion chamber which converges from the inlet to the outlet thereof. An extrusion headstock is connected to the outlet of the fusion chamber and includes the divergent walls which extend from the end of the fusion chamber to an extrusion gauge having plural orifices therein.

GB 918 910 relates to a method and apparatus for increasing the orientation into generally parallel relationship of magnetic particles united by a plastic elastomeric material. An extrusion die is provided for effecting the orientation into substantially parallel relationship.

### The Invention

The object of the invention is to obtain a die for biaxial stretching of a polymer material at film extrusion, wherein coalescence of EVOH is achieved to a larger degree than by the known technique causing the formation of larger overlapping EVOH areas and further improved oxygen barrier properties to obtain a die for biaxial stretching by which shear is substantially avoided and only stretching of the material occurs, a very homogenous film with evenly distributed lamellas being achieved over the whole width of the film and to obtain a die for biaxial stretching which, in spite of a high flow rate, accomplishes a film having good barrier properties. The latter is very important in large scale manufacturing with high material flow rates and high coating rates.

The above object is obtained according to the invention by a die as defined in claim 1.

Particular embodiments of the invention are the subject of the dependent claims.

### Description of the Drawing

The invention will be further explained in the following by means of an example reference being made to the accompanying drawing, on which
Fig. 1 is a cross sectional view with partly cut away portions of a device for film extrusion having a die according to the invention, and
Fig. 2 is an elevational view of the die.

### Detailed Description of the Invention

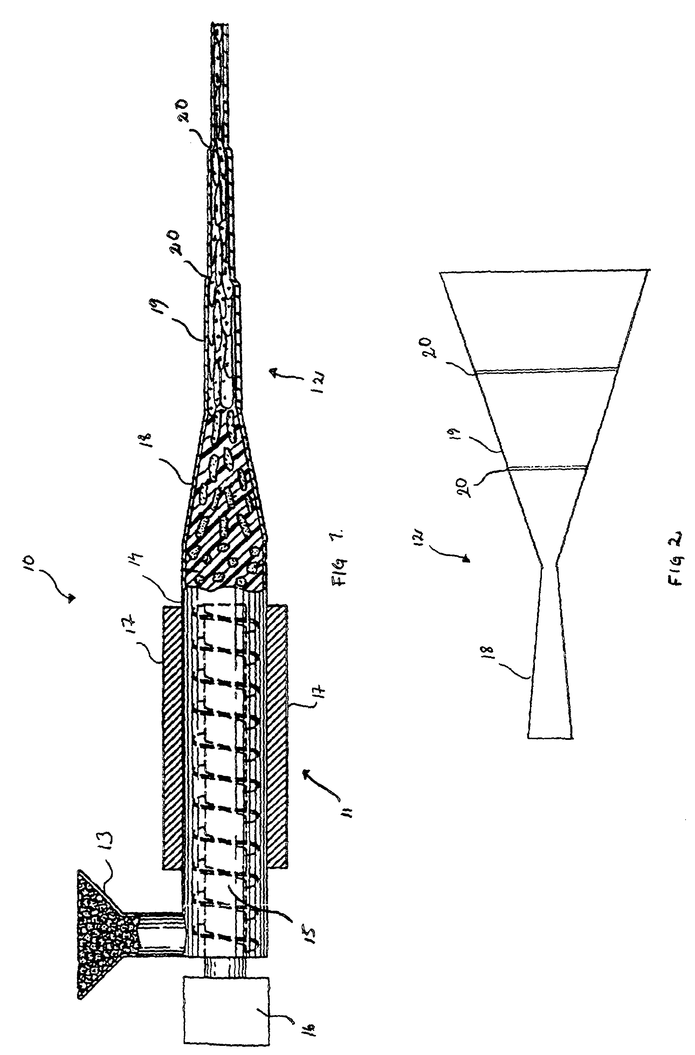

In Fig. 1 is shown an extrusion device 10 comprising an extruder 11 and a die 12 according to the invention. The extruder 11 has a raw material hopper 13 for charging the raw material and a cylinder body 14 having a screw 15 of conventional type provided therein, said screw being rotatable around its longitudinal axis and being driven by an electric or hydraulic motor 16 having variable rotation speed. The raw material in the form of precompounded pellets of PE and EVOH with addition of compatibilizer is charged into the hopper 13 and falls down into the cylinder body 14 which is heated with external heating radiators or heating coils 17. In the cylinder body 14 the raw material is heated by the heating coils 17 and distributed by friction during transport forwards through the cylinder body 14 by the rotating screw 15. When the polymer blend reaches the die 12 it is a melt which by means of the screw is injected into the die.

EVOH and PE are incompatible polymers and the melted polymer blend consists of a PE matrix wherein an EVOH phase is dispersed in the form of droplets. The size of the EVOH spheres is determined by the blending extruder and the compounding device i.e. the extruder, the surface tensions in the interfaces and the reological properties of the components. Coalescence as well as dispersion occurs and the EVOH spheres obtain an equilibrium size.

However, the size of the spheres may be affected by the addition of compatibilizers and/or the effect of shear forces. Since the lamellar and fibrillar morphologies are not equilibrium structures they are very dependent on the processing parameters. Also a homogenous blend can phase separate if for instance the temperature is changed. A compatibilizer makes the blend more stable to morphological changes between processing devices/steps such as screw, die, drawdown, etc. Thus the compatibilizers prevent the loss of a created and desirable morphology when the blend passes through a processing device/step having low or undesirable shear forces, for example from compounding to extruder or from die to drawdown.

At good adhesion, i.e. efficient compatibilisation, there is an efficient stress transfer across the interface. The strength of the joining of phases is improved by a factor 50 by using a compatibilizer which is approximately the same as the cohesive strength of a homopolymer. Example of an applicable efficient compatibilizer for a polymer system with EVOH and PE is maleic acid anhydride (MA).

The die 12 comprises a first, converging section 18 having a form which is mainly frusto conical and has a circular cross section. The end of the converging section 18 having the largest diameter is connected to the extruder 11 and the other end transfers directly into another diverging section 19, the transition from the first section 18 to the second section 19 occuring via a transition area having a cross section which gradually changes from circular to substantially rectangular. The die 12 is also provided with heating coils.

Thus, when the polymer melt passes from the cylinder body 14 to the converging section 18 of the die 12, the dispersed EVOH droplets further coalescence, larger aggregates of droplets being formed at the same time as they are stretched in the flow direction. In the die 12 according to the invention it is very important that shear is avoided and that the EVOH droplets substantially only are subjected to stretching. In order not to disturb the laminar flow it is therefore essential that all inner surfaces of the die are very smooth and even, and the inner surfaces may therefore be coated by a material having low friction, e.g. Teflon® .

Other ways of accomplishing low friction may be for instance air intake such that an air film is created between the melt and the inner walls of the die. The inner walls of the die may also be made wavy in order to achieve decreased contact between the melt and the inner walls.

The diverging section 19 is continuously broadened in the flow direction and has continuously or stepwise decreasing thickness in a plane perpendicular to the flow direction such that a converging as well as a diverging flow is obtained. In the diverging section 19 a biaxial stretching of the polymer material therefore occurs, the elongated dispersed droplets being broadened in a direction perpendicular to but within the same plane as the flow direction under the formation of large thin layers or lamellas, at the same time as they are further lengthened in the flow direction in order to achieve a laminar structure having overlapping layers of EVOH within the PE matrix. The EVOH droplets are subjected to a biaxial stretching, i.e. the coalesced EVOH droplets are stretched within the plane of the die in the flow direction as well as in a plane perpendicular to the flow direction. The formed lamellas all have different sizes and shapes but are large enough to be overlapping each other, whereby an EVOH layer having very low oxygen permeability is achieved within the PE matrix.

In order not to disturb the laminar flow it is important that occurring stepwise transitions 20 to lower hight are very even and preferably occurs with an angle of approximately 30-60°, preferably about 45°.

### Example 1

LDPE (Low Density Polyethylene) and compatibiliser of maleic acid anhydride or acrylic acid in varying concentrations were precompounded and blended in granular form in an extruder. The granules from the different materials were melted at high shear rates by a combination of a dispersive and distributing blending method. A film having a thickness of 50 µm was extruded and samples were analysed with respect to the oxygen barrier properties.

The result showed that after extrusion with the die according to the invention with 0,0415 weight% acrylic acid a film was achieved having three different morphologies: co-continuous phases, thin fibres and perfect platelets. The perfect platelets indicate that the die according to the invention has the ability to stretch blends of the mentioned type to a lamellar structure. Using the diverging die of the invention resulted in an oxygen permeability of 476•cm³/(m²•24 hrs•atm) at 23 °C and 50% RH.

## Claims

1. Die (12) for extruding a melt of a polymer blend comprising droplets from a first polymer phase dispersed in a polymer matrix, which is incompatible with said first polymer phase, said die (12) comprising a conical converging section (18) prolonging the dispersed droplets in the flow direction and a diverging section (19) broadening said dispersed droplets in a direction perpendicular to but within the same plane as the flow direction, which diverging section (19) in the flow direction has a decreasing thickness in a plane perpendicular to the flow direction in order to achieve a biaxial stretching of the polymer material and thus a laminar structure having overlapping layers of said first polymer phase dispersed in said polymer matrix, **characterized in that** the conical converging section (18) is connected directly to the diverging section (19),

2. Die according to claim 1, **characterized in that** the diverging section (19) comprises at least two, preferably three, portions which in the flow direction have stepwise decreasing thickness in a plane perpendicular to the flow direction.

3. Die according to claim 1, **characterized in that** the diverging section in the flow direction has a continuously decreasing thickness in a plane perpendicular to the flow direction.

4. Die according to claim 2 or 3, **characterized in that** the conical converging section has a substantially circular cross section.

5. Die according to claim 4, **characterized in that** the diverging section (19) has a substantially rectangular cross section.

6. Die according to claim 5, **characterized in that** the inner surfaces of the die (12) are very even and preferably coated with an antifriction material.

## Patentansprüche

1. Werkzeug zum Extrudieren einer Schmelze einer Polymermischung mit Tröpfchen aus einer ersten Polymerphase, die in einer Polymermatrix dispergiert ist, welche inkompatibel zu der ersten Polymerphase ist, wobei das Werkzeug (12) einen konisch konvergierenden Abschnitt (18), der die dispergierten Tröpfchen in der Strömungsrichtung verlängert, und einen divergierenden Abschnitt (19), der die dispergierten Tröpfchen in einer Richtung senkrecht zu der aber in derselben Ebene wie die Strömungsrichtung verbreitert, aufweist, wobei der divergierende Abschnitt (19) in der Strömungsrichtung eine abnehmende Dicke in einer zu der Strömungsrichtung senkrechten Ebene hat, um eine biaxiale Streckung des Polymermaterials und damit eine laminare Struktur mit überlappenden Schichten aus der ersten Polymerphase, die in der Polymermatrix dispergiert ist, zu erreichen, **dadurch gekennzeichnet, daß** der konisch konvergierende Abschnitt (18) direkt mit dem divergierenden Abschnitt (19) verbunden ist.

2. Werkzeug nach Anspruch 1, **dadurch gekennzeichnet, daß** der divergierende Abschnitt (19) wenigstens zwei, vorzugsweise drei Bereiche besitzt, die eine in der Strömungsrichtung abnehmende Dicke in einer zu der Strömungsrichtung senkrechten Ebene haben.

3. Werkzeug nach Anspruch 1, **dadurch gekennzeichnet, daß** der divergierende Abschnitt in der Strömungsrichtung eine kontinuierlich abnehmende Dicke in einer zu der Strömungsrichtung senkrechten Ebene hat.

4. Werkzeug nach Anspruch 2 oder 3, **dadurch gekennzeichnet, daß** der konisch konvergierende Abschnitt einen im wesentlichen kreuzförmigen Querschnitt besitzt.

5. Werkzeug nach Anspruch 4, **dadurch gekennzeichnet, daß** der divergierende Abschnitt (19) einen im wesentlichen rechteckigen Querschnitt hat.

6. Werkzeug nach Anspruch 5, **dadurch gekennzeichnet, daß** die Innenflächen des Werkzeugs (12) sehr eben und vorzugsweise mit einem Antireibungsmaterial beschichtet sind.

## Revendications

1. Filière (12) pour l'extrusion d'un bain de fusion d'un mélange de polymères comprenant des gouttelettes provenant d'une première phase de polymère dispersée dans une matrice polymères, qui est incompatible avec ladite première phase de polymères, ladite filière (12) comprenant une section de convergence conique (18) qui prolonge les gouttelettes dispersées dans la direction d'écoulement et un section de divergence (19) qui élargit lesdites gouttelettes dispersées dans une direction perpendiculaire à, mais située dans le même plan que, la direction d'écoulement, laquelle section de divergence (19) dans la direction d'écoulement a une épaisseur décroissante dans un plan perpendiculaire à la direction d'écoulement afin de réaliser un étirement biaxial du matériau polymère et ainsi une structure laminaire comportant des couches de recouvrement de ladite première phase de polymère dispersée dans ladite matrice de polymères, **caractérisée en ce que** la section de convergence conique (18) est reliée directement à la section de divergence (19).

2. Filière selon la revendication 1, **caractérisée en ce que** la section de divergence (19) comprend au moins deux, de préférence trois, parties qui, dans la direction d'écoulement, ont une épaisseur qui décroît dans un plan perpendiculaire à la direction d'écoulement.

3. Filière selon la revendication 1, **caractérisée en ce que** la section de divergence située dans la direction d'écoulement a une épaisseur décroissante en continu dans un plan perpendiculaire à la direction d'écoulement.

4. Filière selon la revendication 2 ou 3, **caractérisée en ce que** la section de convergence conique comporte une section transversale sensiblement circulaire.

5. Filière selon la revendication 4, **caractérisée en ce que** la section de divergence (19) possède une section transversale sensiblement rectangulaire.

6. Filière selon la revendication 5, **caractérisée en ce que** les surfaces intérieures de la filière (12) sont très planes et de préférence revêtues d'un matériau antifrottement.
